# FASCICULE DE BREVET EUROPEEN

(11) **EP 2 497 663 B1**
(45) Date de publication et mention de la délivrance du brevet: **10.07.2013**
(21) Numéro de dépôt: 12000744.8
(22) Date de dépôt: 03.02.2012
(51) Int. Cl.: B60J 1/16

(54) **Panneau de véhicule muni d'une fenêtre mobile, et véhicule associé**
Fahrzeugpaneel, das mit einem beweglichen Fenster ausgestattet ist, und entsprechendes Fahrzeug
Vehicle panel provided with a mobile window, and associated vehicle

(30) Priorité: 11.03.2011 FR 1100734
(43) Date de publication de la demande: 12.09.2012
(73) Titulaire: EUROCOPTER, 13725 Marignane Cédex (FR)
(72) Inventeur: Diamant, Xavier, 13510 Eguilles (FR); Remy, Jean-Luc, 13790 Rousset (FR); Lambert, Eric, 13004 Marseille (FR); Cristiano, Cédric, 13480 Cabries (FR)
(74) Mandataire: GPI & Associés

(56) Documents cités:
- WO-A2-2010/146185
- FR-A1- 2 885 381

## Description

La présente invention concerne un panneau de véhicule muni d'une fenêtre coulissante ainsi que le véhicule associé, un aéronef de type giravion plus particulièrement. Un tel panneau est connu du WO 2010/146185.

Pour ménager une issue de secours afin de permettre l'évacuation d'un occupant d'un véhicule, il est courant de munir l'enveloppe du véhicule d'un panneau amovible. On note que l'on entend par enveloppe du véhicule la structure extérieure de ce véhicule, dénommée par exemple fuselage dans le cadre d'un aéronef.

Par exemple, ce panneau peut être une porte largable d'un aéronef. En enlevant la porte à l'aide d'un mécanisme de largage, on libère ainsi une issue de secours que peut emprunter un occupant du véhicule.

Il est à noter que le mécanisme de largage du panneau doit être sécurisé afin d'éviter un largage indu lors de l'utilisation du véhicule.

En outre, lors d'un accident du véhicule, l'enveloppe du véhicule peut subir des déformations importantes, de telles déformations étant susceptibles de dégrader le fonctionnement du mécanisme de largage du panneau.

L'état de la technique inclut une pluralité de documents.

Par exemple, le document US 6 341 748 présente un panneau muni d'un hublot, le panneau étant apte à obturer de manière réversible une ouverture pour ménager une issue de secours en cas de besoin.

Il est à noter que l'on entend par hublot un élément transparent fixe, et par fenêtre un élément transparent mobile par rapport au corps qui la soutient.

Le panneau est fixé à la périphérie de l'ouverture par une pluralité de loquets, les loquets pouvant être rétractés par un mécanisme de désolidarisation muni de moyens mobiles coulissant dans une glissière. En manoeuvrant ce mécanisme, on met en mouvement les moyens mobiles, le déplacement des moyens mobiles induisant une rétraction des loquets. Il est alors possible d'enlever le panneau pour ménager l'issue de secours requise.

Le document US 5 826 824 présente aussi un panneau muni d'un hublot, le panneau étant apte à obturer de manière réversible une ouverture faisant office d'issue de secours.

Le panneau est relié à la périphérie de l'ouverture par un joint, une pluralité de moyens de rétention bloquant le panneau latéralement. Dès lors, une poignée de commande est agencée pour exercer un effort permettant de désolidariser le joint de la périphérie de l'ouverture afin de permettre le détachement du panneau.

Par ailleurs, on note que les véhicules sont parfois munis de fenêtres pouvant être ouvertes. Plus particulièrement, un aéronef peut comprendre au moins une fenêtre que l'équipage ouvre durant des conditions climatiques dégradées afin notamment d'éviter la formation de buée, des tels fenêtres étant classiquement dénommées « fenêtre mauvais temps ».

Une fenêtre mauvais temps coulissante peut alors être agencée sur un panneau qui est largable pour ménager une issue de secours, une porte largable ou un hublot largable par exemple.

On comprend que ces fenêtres mauvais temps sont généralement de dimensions réduites et sont de nature à gêner la visibilité de l'équipage.

On note que les documents EP 1 433 633 et EP 1 424 278 ont pour objet des fenêtres coulissantes.

Le document US 3 010 549 suggère d'ouvrir une fenêtre pour ménager une issue de secours.

Par ailleurs, on connaît aussi les documents WO 2010/146185 et FR 2 885 381.

La présente invention a alors pour objet de proposer un panneau de véhicule muni d'une fenêtre mobile permettant de ménager une issue de secours, les risques de blocage de l'issue de secours indépendamment de la nature de l'accident étant suivant la variante au moins réduits à savoir faibles voire nuls.

Selon l'invention, un panneau de véhicule est muni d'un corps s'étendant longitudinalement et en élévation, ce corps ayant une fenêtre mobile et un moyen de guidage d'un mouvement de ladite fenêtre par rapport au corps, ladite fenêtre ayant un cadre à l'intérieur duquel se trouve une surface transparente.

Le panneau est notamment remarquable en ce que la fenêtre comporte un moyen de désolidarisation manuel de la fenêtre et du corps pour ménager une issue de secours, le moyen de désolidarisation coopérant avec le moyen de guidage.

Dès lors, en cas d'accident du véhicule, on enlève la fenêtre du panneau à l'aide du moyen de désolidarisation, contrairement à des techniques antérieures visant à larguer l'intégralité du panneau.

La fenêtre utilisée peut par exemple remplir la fonction des fenêtres mauvais temps non largables connus. Par conséquent, selon l'invention, la fenêtre remplit d'une part le rôle d'une fenêtre classique ainsi que d'une fenêtre mauvais temps et, d'autre part permet de ménager une issue de secours suite à un accident.

Notamment, le moyen de désolidarisation permet d'enlever la fenêtre suite à un accident provoquant la déformation du panneau et qui provoquerait un empêchement de manoeuvre de la fenêtre par simple coulissement.

Ce panneau peut de plus comprendre une ou plusieurs des caractéristiques qui suivent.

Par exemple, la surface transparente de la fenêtre peut être en vis-à-vis d'une ouverture du corps lorsque la fenêtre est dans une position fermée, cette ouverture ayant des dimensions données pour permettre à un individu de la traverser.

Par suite, la surface transparente est de grandes dimensions contrairement à une fenêtre mauvais temps du type usuellement utilisé.

Ainsi, si la fenêtre se déforme fortement suite à un accident, on comprend que la surface transparente ne va pas résister aux efforts subis, cette surface transparente pouvant en effet exploser.

Dès lors, dans l'hypothèse pénalisante et improbable d'un dysfonctionnement du moyen de désolidarisation suite à un accident violent, un individu peut à l'extrême passer au travers de la surface transparente pour sortir du véhicule. Un passage au travers de la fenêtre est d'autant plus facile lorsque la surface transparente est détruite à l'issue de l'accident.

Par ailleurs, la fenêtre coulissant longitudinalement par rapport au corps afin de passer d'une position fermée à une position ouverte au moins partiellement et inversement, le moyen de guidage comprend au moins un premier rail et au moins un deuxième rail fixés au corps et disposés de part et d'autre de la fenêtre en élévation, le premier rail coopérant avec au moins un moyen de liaison de la fenêtre, le deuxième rail coopérant avec le moyen de désolidarisation.

Par exemple, chaque premier rail se situe à l'aplomb de la fenêtre, la fenêtre étant située à l'aplomb de chaque deuxième rail.

Selon un aspect de l'invention, chaque premier rail comprenant un premier moyen de roulement coulissant dans une première glissière, le moyen de liaison comprend un pion de liaison du cadre de la fenêtre, ce pion de liaison pouvant être enfoncé dans un orifice en élévation du moyen de roulement.

Ainsi, un déplacement de la fenêtre selon la direction des pions de liaison autorisé par le moyen de désolidarisation permet de désolidariser ces pions de liaison du moyen de guidage.

Par exemple, chaque deuxième rail peut comprendre au moins un plot muni d'un patin coulissant dans une deuxième glissière du deuxième rail, le moyen de désolidarisation étant muni d'un moyen de retenue par plot coopérant par interférence de forme avec le plot ainsi que d'un doigt de verrouillage mobile par plot pour solidariser de manière réversible chaque moyen de retenue à un plot.

Par conséquent, lorsque les doigts de verrouillage sont engagés dans les plots et les moyens de retenue associés, il est impossible d'enlever la fenêtre du panneau.

A l'inverse, lorsque les doigts de verrouillage ne sont pas engagés dans les plots et les moyens de retenue associés, un basculement de la fenêtre permet de désolidariser la fenêtre de chaque deuxième rail.

Selon une variante, le moyen de retenue possède une forme de U munie de deux branches latérales, le plot étant disposé entre les branches latérales suivant une direction longitudinale, le doigt de verrouillage traversant le plot et les branches lorsque le moyen de désolidarisation solidarise la fenêtre au corps.

Par ailleurs, le moyen de désolidarisation inclut au moins une poignée de largage solidaire de la fenêtre et reliée par une chaîne mécanique à chaque doigt de verrouillage afin de requérir le déplacement des doigts d'une position verrouillée vers une position déverrouillée et inversement.

Favorablement, le moyen de désolidarisation inclut deux poignées de largage disposées transversalement de part et d'autre d'une surface transparente de la fenêtre. Ainsi le moyen de désolidarisation peut être manoeuvré de l'extérieur et de l'intérieur du véhicule.

Selon une réalisation préférée, le panneau peut alors comporter :
- deux premiers rails du moyen de guidage fixés sur le corps coopérant avec deux pions de liaison du cadre de la fenêtre,
- deux deuxièmes rails du moyen de guidage fixés sur le corps, chaque deuxième rail comprenant un plot muni d'un patin coulissant dans une deuxième glissière du deuxième rail, le moyen de désolidarisation étant muni de deux moyens de retenue et de deux doigts de verrouillage mobiles, chaque moyen de retenue coopérant par interférence de forme avec un plot ainsi qu'avec un doigt de verrouillage, chaque doigt de verrouillage solidarisant de manière réversible chaque moyen de retenue à un plot,
- au moins une poignée de largage reliée par une chaîne mécanique à un organe rotatif intermédiaire, chaque doigt de verrouillage étant articulé à deux points diamétralement opposés de l'organe rotatif, une rotation de la poignée de largage entraînant une translation des deux doigts de verrouillage dans des sens opposés.

Selon un autre aspect, le panneau peut comporter une poignée de coulissement pour déplacer la fenêtre d'une position fermée à une position au moins partiellement ouverte par rapport au corps, la poignée de coulissement coopérant avec un crochet dudit corps pour assurer la fermeture de ladite fenêtre.

Une poignée de largage de la fenêtre est optionnellement reliée à la poignée de coulissement par une liaison mécanique pour requérir la désolidarisation de la poignée de coulissement et du crochet.

Par exemple, la liaison mécanique inclut un câble relié à une goupille, la goupille liant la poignée de coulissement à la fenêtre dans une première position verrouillée et désolidarisant la poignée de coulissement de la fenêtre dans une deuxième position déverrouillée.

Outre un panneau, l'invention vise un véhicule muni d'un tel panneau. Ce véhicule peut être un véhicule roulant, flottant ou volant, et plus particulièrement un aéronef.

L'invention et ses avantages apparaîtront avec plus de détails dans le cadre de la description qui suit avec des exemples de réalisation donnés à titre illustratif en référence aux figures annexées qui représentent :
- la figure 1, une vue d'un véhicule muni d'un panneau selon l'invention comportant une fenêtre en position fermée,
- la figure 2, une vue d'un véhicule muni d'un panneau selon l'invention comportant une fenêtre en position ouverte,
- la figure 3, une vue éclatée d'une fenêtre selon l'invention,
- la figure 4, une vue éclatée d'un moyen de désolidarisation,
- la figure 5, une coupe schématique explicitant le fonctionnement du moyen de désolidarisation,
- les figures 6 et 7, des schémas présentant un moyen de coulissement selon l'invention.

Les éléments présents dans plusieurs figures distinctes sont affectés d'une seule et même référence.

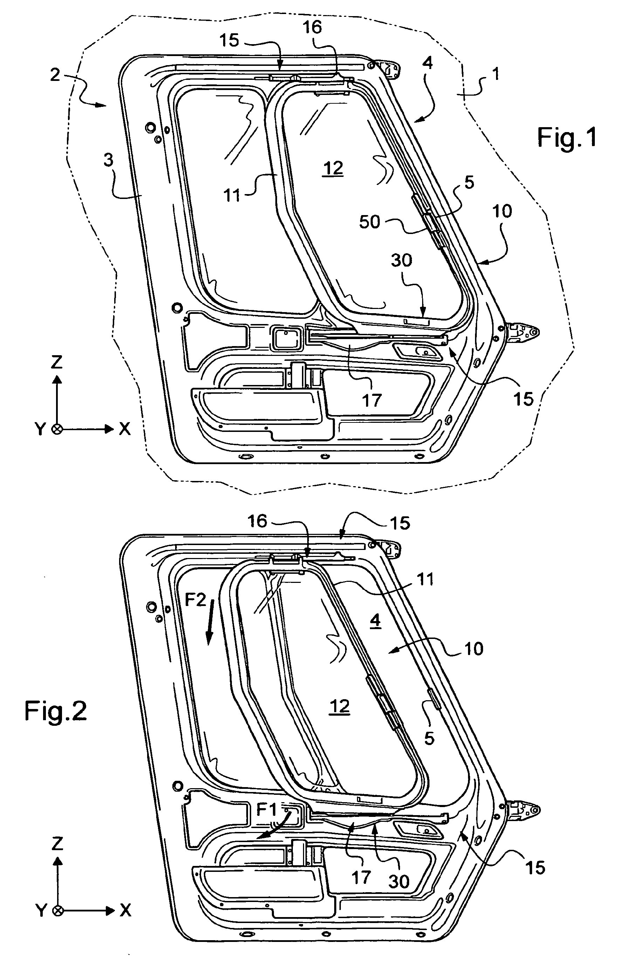

On note que trois directions X, Y et Z orthogonales les unes par rapport aux autres sont représentées sur les figures 1 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

Les figures 1 et 2 montrent un véhicule 1 représenté de manière schématique pour ne pas alourdir lesdites figures 1 et 2. Ce véhicule 1 est par exemple du type aéronef.

Le véhicule 1 possède une enveloppe extérieure délimitant sa géométrie, cette enveloppe extérieure comprenant un panneau 2, une porte par exemple.

Ce panneau 2 est pourvu d'un corps 3 s'étendant longitudinalement et en élévation, l'épaisseur du corps 3 étant dirigée selon une direction transversale. Le corps possède une ouverture 4 de grandes dimensions, les dimensions données de cette ouverture 4 étant déterminées pour permettre le passage d'un individu en cas d'accident. L'ouverture 4 fait alors office d'issue de secours.

De plus, le panneau 2 est pourvu d'une fenêtre 10 obturant l'ouverture 4 dans une position fermée représentée sur la figure 1. La fenêtre 4 comprend dès lors un cadre 11 portant une surface transparente 12, telle qu'une vitre.

Par suite, la fenêtre est fixée au corps 3 du panneau par un moyen de guidage 15 permettant le passage de la fenêtre 10 de la position fermée représentée sur la figure 1 vers une position au moins partiellement ouverte. Par exemple, le moyen de guidage comprend au moins un premier rail 16 et au moins une deuxième rail 17 fixé au corps 2 de part et d'autre de la fenêtre 10 selon une direction en élévation pour permettre le passage vers la position ouverte représentée sur la figure 2 en coulissant la fenêtre 10 par rapport au corps 3.

On note sur la figure 1 que la fenêtre peut comporter une poignée de coulissement 50 solidaire du cadre 11, cette poignée de coulissement pouvant coopérer avec un crochet 5 du corps 3. Pour requérir l'ouverture de la fenêtre 10, un individu manoeuvre la poignée de coulissement 50 qui effectue une rotation autour d'un axe de pivotement pour éloigner cette poignée de coulissement 50 du crochet 5.

Par ailleurs, en position fermée, la fenêtre est en vis-à-vis de l'ouverture 4 du corps. On comprend que la surface transparente 12 est de grandes dimensions à l'instar de l'ouverture 4. Si la fenêtre est endommagée suite à un accident, la surface transparente peut être brisée et permettre le passage d'un individu au travers de la fenêtre et de l'ouverture 4.

En outre, la fenêtre comprend un moyen de désolidarisation manuel coopérant notamment avec le moyen de guidage 15 pour autoriser le largage de la fenêtre, à savoir le détachement de cette fenêtre 10 du corps 3.

Au lieu de larguer l'intégralité du panneau, l'invention vise donc uniquement le largage d'une fenêtre, à savoir d'un organe vitré qui est mobile contrairement à un hublot qui est fixe par définition.

En référence à la figure 2, pour effectuer le largage de la fenêtre, on peut manoeuvrer le moyen de désolidarisation 30 coopérant avec le deuxième rail 17 afin de désolidariser le moyen de désolidarisation 30 du moyen de guidage 15 selon la flèche F1, puis détacher la fenêtre 10 en l'éloignant du premier rail 16 selon la flèche F2.

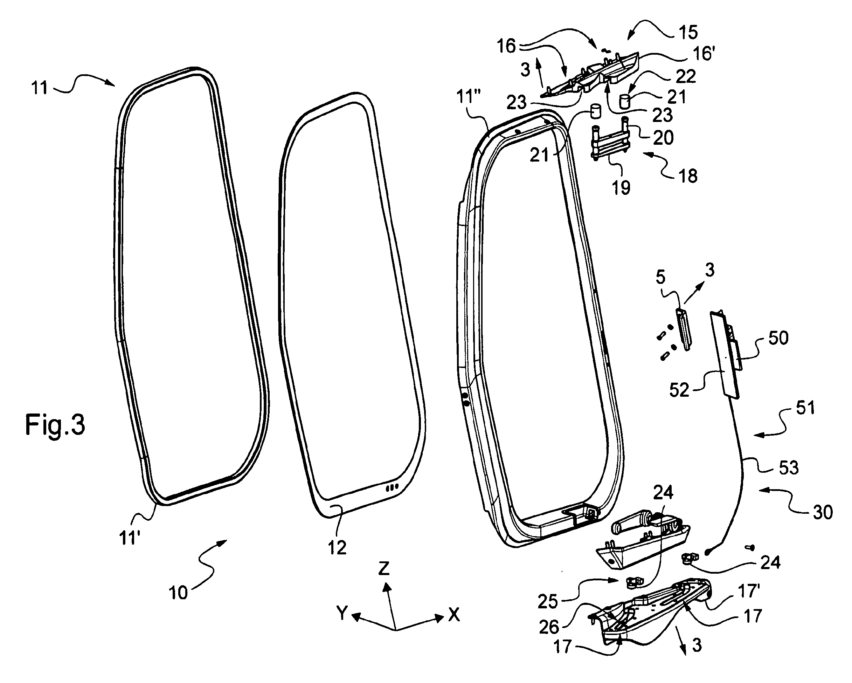

La figure 3 montre une vue éclatée d'une fenêtre 10 selon l'invention coopérant avec un moyen de guidage 15 du corps 3 du panneau.

Ce moyen de guidage inclut au moins un premier rail 16, à savoir un rail supérieur à l'aplomb de la fenêtre 10. Selon la réalisation préférée schématisée, le moyen de guidage inclut deux premiers rails 16 formant conjointement un premier ensemble 16' d'un seul tenant.

Chaque premier rail 16 est muni d'une glissière 23 ménagée dans le premier ensemble 16', et d'un premier moyen de roulement 21 pourvu d'un orifice 22. Par exemple, le premier moyen de roulement 21 est un galet coulissant dans la glissière associée.

Dès lors, la fenêtre 10 comprend un cadre 11 pourvu d'un joint 11' et d'une structure porteuse 11" enserrant une surface transparente 12.

La structure porteuse 11" porte ainsi un moyen de liaison 18 coopérant avec chaque premier rail. Ce moyen de liaison 18 est muni d'un support de liaison 19 fixé au cadre 11 et plus particulièrement à sa structure porteuse 1 1 ", ce support de liaison 19 ayant un pion de liaison 20 par premier moyen de roulement 21.

On insère alors les pions de liaison 20 dans les orifices 22 des premiers moyens de roulement 21. On note qu'une déformation des glissières n'empêche pas un détachement de la fenêtre, cette fenêtre ne coopérant pas de manière directe avec les glissières.

De plus, le moyen de guidage 15 inclut au moins un deuxième rail 17, à savoir un rail inférieur à l'aplomb duquel se trouve la fenêtre 10. Selon la réalisation préférée schématisée, le moyen de guidage inclut deux deuxièmes rails 17 formant conjointement un deuxième ensemble 17' d'un seul tenant.

Chaque deuxième rail 17 est muni d'une glissière 26 ménagée dans le deuxième ensemble 17', et d'un plot 24 pourvu d'un patin 25 coulissant dans la glissière associée. Ainsi, le plot saille de la glissière associée alors qu'un patin de type galet par exemple, solidaire du plot, coulisse dans ladite glissière.

Dès lors, la fenêtre 10 comprend un moyen de désolidarisation coopérant avec chaque deuxième rail 17.

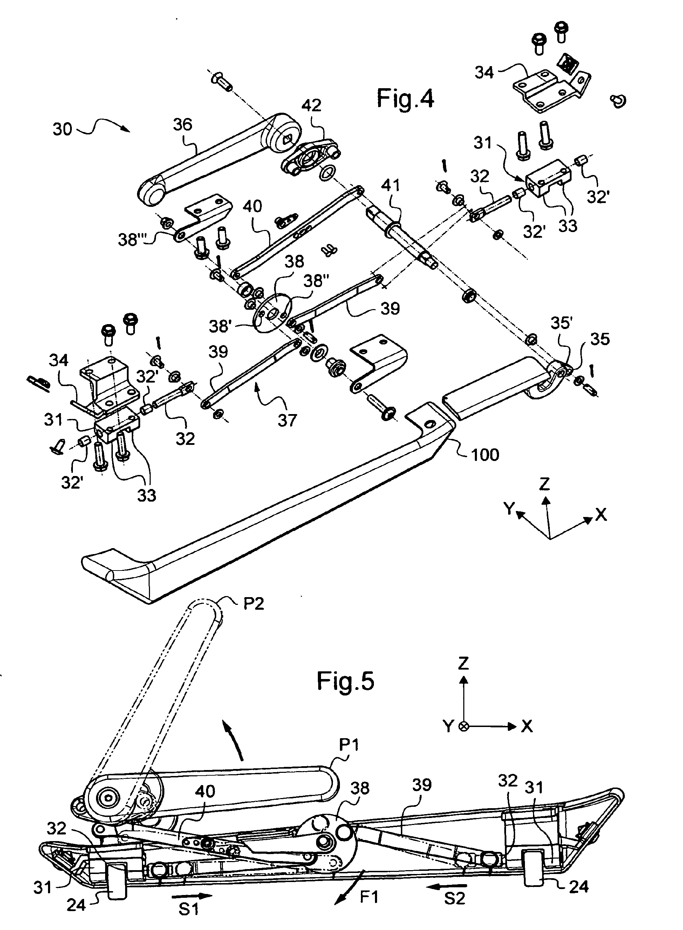

En référence à la figure 4, le moyen de désolidarisation 30 comprend un moyen de retenue 31 par plot, chaque moyen de retenue 31 étant fixé par une attache 34 au cadre 11 et coopérant par interférence de forme avec un plot. Par suite, chaque moyen de retenue 31 peut avoir une forme de U muni de deux branches latérales 33 entre lesquelles est agencé un plot 24 lorsque la fenêtre est liée au corps 2.

On note que le capot 100 peut être fixé aux attaches 34 par exemple.

Par ailleurs, le moyen de désolidarisation comprend un doigt de verrouillage 32 par plot, chaque doigt de verrouillage pouvant traverser conjointement un moyen de retenue 31 et le plot 24 associé. On note que le moyen de retenue peut être muni d'une bague de guidage 32' insérée dans chaque branche latérale 33 pour favoriser le passage d'un doigt de verrouillage 32.

Pour déplacer les doigts de verrouillage 32 d'une position verrouillée à une position déverrouillée et inversement, le moyen de désolidarisation peut comporter au moins une poignée de largage, et favorablement deux poignées de largage 35, 36 disposées de part et d'autre de la surface transparente 12.

Les poignées de largage 35, 36 sont alors liées mécaniquement à chaque doigt par une chaîne mécanique 37.

Par exemple, les poignées de largage 35, 36 sont liées par un arbre 41 qui est relié au cadre 3 par un support de fixation 42. De plus, au moins une poignée de largage 35 est articulée à une bielle de commande 40 par un déport 35', la bielle de commande étant articulée à un organe rotatif 38 intermédiaire. L'organe rotatif 38 est retenu au cadre 11 par une équerre 38"'.

Chaque doigt de verrouillage est alors articulé à cet organe rotatif 38 par une bielle de liaison 39. En référence à la figure 4, lorsque le moyen de désolidarisation 30 comprend deux doigts de verrouillage 32, ces deux doigts de verrouillage 32 sont articulés à deux points 38', 38" diamétralement opposés de l'organe rotatif 38.

La figure 5 montre le moyen de désolidarisation dans une position verrouillée en traits pleins empêchant le largage de la fenêtre, et dans une position déverrouillée en pointillés autorisant le largage de la fenêtre.

Dans la position verrouillée, les poignées de largage se trouvent dans une première position P1. Les doigts de verrouillage 32 solidarisent alors chaque plot 24 à un moyen de retenue.

A l'inverse, lorsque que l'on manoeuvre au moins une poignée de largage en lui faisant effectuer un mouvement rotatif pour atteindre une deuxième position P2, les doigts de verrouillage effectuent une translation de manière à ne plus traverser les plots.

Selon la variante explicitée précédemment, les deux doigts de verrouillage effectuent une translation selon des sens S1, S2 opposés.

Par conséquent, les moyens de retenue 31 ne sont plus fixés aux plots. Un mouvement de la fenêtre selon la flèche F1 requis par un individu permet de détacher cette fenêtre du corps 3.

En référence à la figure 3, le moyen de désolidarisation peut coopérer avec une poignée de coulissement 50, la poignée de coulissement 50 étant fixée à la structure porteuse 11" du cadre 11 par un support de coulissement 52. On relie alors au moins une poignée de largage à la poignée de coulissement 50 par une liaison mécanique 51 incluant un câble 53.

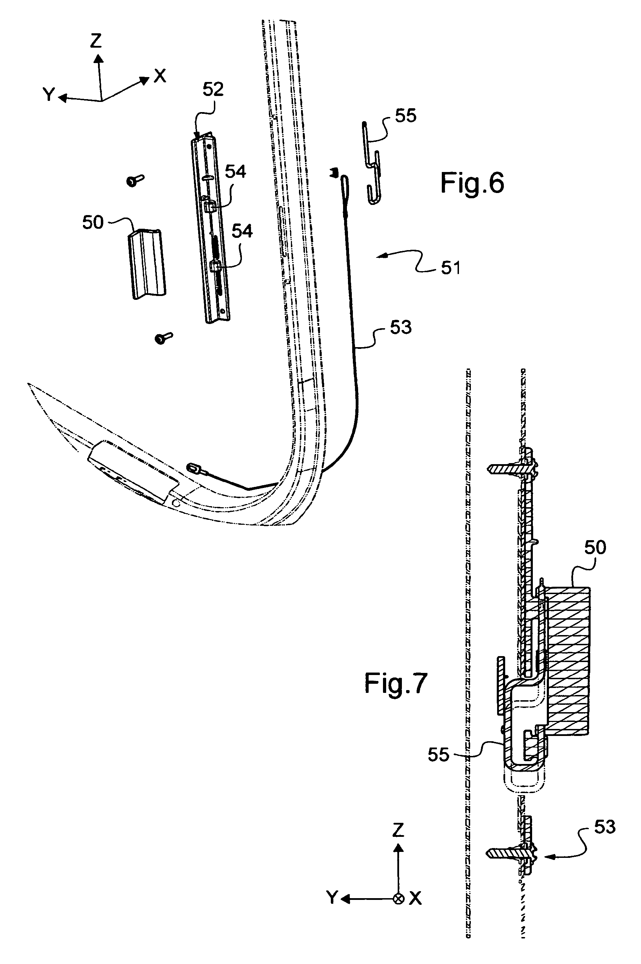

La figure 6 explicite une liaison mécanique 51 préférée.

Cette liaison mécanique 51 comprend un câble 53 attaché à un déport 35' d'une poignée de largage 35 par exemple, ainsi qu'une goupille 55.

En effet, la poignée de coulissement 50 coopère avec deux articulations 54 du support de coulissement 52 via la goupille 55.

Pour une position verrouillée des poignées de largage, la goupille 55 est représentée en traits pleins sur la figure 7. Dès lors, la goupille 55 fixe la poignée de coulissement 50 au support de coulissement 52.

A l'inverse, pour une position déverrouillée des poignées de largage, la goupille 55 est représentée en pointillés sur la figure 7. Dès lors, la goupille 55 ne lie plus la poignée de coulissement 50 au support de coulissement 52.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Panneau (2) de véhicule (1) muni d'un corps (3) s'étendant longitudinalement et en élévation, ledit corps (3) ayant une fenêtre (10) mobile et un moyen de guidage (15) d'un mouvement de ladite fenêtre (10) par rapport au corps (3), ladite fenêtre (10) ayant un cadre (11) à l'intérieur duquel se trouve une surface transparente (12),
**caractérisé en ce que** ladite fenêtre (10) comporte un moyen de désolidarisation (30) manuel de la fenêtre (10) et du corps (3) pour ménager une issue de secours, le moyen de désolidarisation (30) coopérant avec le moyen de guidage (15).

2. Panneau selon la revendication 1,
**caractérisé en ce que** ladite surface transparente (12) est en vis-à-vis d'une ouverture (4) dudit corps (3) lorsque la fenêtre (10) est dans une position fermée, ladite ouverture (4) ayant des dimensions données pour permettre à un individu de la traverser.

3. Panneau selon l'une quelconque des revendications 1 à 2,
**caractérisé en ce que** ladite fenêtre (10) coulissant longitudinalement par rapport audit corps (3), ledit moyen de guidage (15) comprend au moins un premier rail (16) et au moins un deuxième rail (17) fixés au corps (3) et disposés de part et d'autre de la fenêtre (10) en élévation, le premier rail (16) coopérant avec au moins un moyen de liaison (18) de la fenêtre (10), le deuxième rail (17) coopérant avec le moyen de désolidarisation (30).

4. Panneau selon la revendication 3,
**caractérisé en ce que**, chaque premier rail (16) comprenant un premier moyen de roulement (21) coulissant dans une première glissière (23), ledit moyen de liaison (18) comprend un pion de liaison (20) dudit cadre (11), ce pion de liaison (18) pouvant être enfoncé dans un orifice (22) en élévation dudit moyen de roulement (21).

5. Panneau selon l'une quelconque des revendications 3 à 4,
**caractérisé en ce que** chaque deuxième rail (17) comprend au moins un plot (24) muni d'un patin (25) coulissant dans une deuxième glissière (26) dudit deuxième rail (17), ledit moyen de désolidarisation (30) étant muni d'un moyen de retenue (31) par plot (24) coopérant par interférence de forme avec ledit plot (24) ainsi que d'un doigt de verrouillage (32) mobile par plot (24) pour solidariser de manière réversible chaque moyen de retenue (31) à un plot (24).

6. Panneau selon la revendication 5,
**caractérisé en ce que** ledit moyen de retenue (31) possède une forme de U munie de deux branches latérales (33), ledit plot (24) étant disposé entre lesdites branches latérales (33), ledit doigt de verrouillage (32) traversant ledit plot (24) et lesdites branches latérales (33) lorsque ledit moyen de désolidarisation (30) solidarise la fenêtre (10) au corps (3).

7. Panneau selon l'une quelconque des revendications 5 à 6,
**caractérisé en ce que** ledit moyen de désolidarisation (30) inclut au moins une poignée de largage (35, 36) solidaire de la fenêtre (10) et reliée par une chaîne mécanique (37) à chaque doigt de verrouillage (32).

8. Panneau selon la revendication 7,
**caractérisé en ce que** ledit moyen de désolidarisation (30) inclut deux poignées de largage (35, 36) disposées transversalement de part et d'autre d'une surface transparente (12) de la fenêtre.

9. Panneau selon l'une quelconque des revendications 1 à 8,
**caractérisé en ce qu'**il comporte :
- deux premiers rails (16) du moyen de guidage (15) fixés sur ledit corps (3) coopérant avec deux pions de liaison (20) du cadre (11) de la fenêtre (10),
- deux deuxièmes rails (17) du moyen de guidage (15) fixés sur ledit corps (3), chaque deuxième rail (17) comprenant un plot (24) muni d'un patin (25) coulissant dans une deuxième glissière (26) dudit deuxième rail (17), ledit moyen de désolidarisation (30) étant muni de deux moyens de retenue (31) et de deux doigts de verrouillage (32) mobiles, chaque moyen de retenue (31) coopérant par interférence de forme avec un plot (24) ainsi qu'avec un doigt de verrouillage (32), chaque doigt de verrouillage (32) solidarisant de manière réversible chaque moyen de retenue (31) à un plot (24),
- au moins une poignée de largage (35, 36) reliée par une chaîne mécanique à un organe rotatif (38) intermédiaire, chaque doigt de verrouillage (32) étant articulé à deux points (38', 38") diamétralement opposés dudit organe rotatif (38), une rotation de la poignée de largage (35, 36) entraînant une translation des deux doigts de verrouillage (32) dans des sens opposées.

10. Panneau selon l'une quelconque des revendications 1 à 9,
**caractérisé en ce qu'**il comporte une poignée de coulissement (50) coopérant avec un crochet (5) dudit corps (3).

11. Panneau selon la revendication 10,
**caractérisé en ce qu'**au moins une poignée de largage (35, 36) est reliée à ladite poignée de coulissement (50) par une liaison mécanique (51) pour requérir la désolidarisation de la poignée de coulissement (50) et dudit crochet (5).

12. Panneau selon la revendication 11,
**caractérisé en ce que** ladite liaison mécanique (51) inclut un câble (53) relié à une goupille (55), la goupille (55) liant la poignée de coulissement (50) à la fenêtre (10) dans une première position verrouillée et désolidarisant la poignée de coulissement de la fenêtre dans une deuxième position déverrouillée.

13. Véhicule (1),
**caractérisé en ce qu'**il comporte un panneau (2) selon l'une quelconque des revendications 1 à 12.

## Patentansprüche

1. Paneel (2) eines Fahrzeugs (1) mit einem Körper (3), der sich in Längsrichtung und in die Höhe erstreckt, wobei der Körper (3) ein bewegliches Fenster (10) und ein Mittel (15) zur Führung einer Bewegung des Fensters (10) relativ zum Körper (3) aufweist, wobei das Fenster (10) einen Rahmen (11) aufweist, in dessen Innerem sich eine transparente Fläche (12) befindet,
**dadurch gekennzeichnet, dass** das Fenster (10) ein Mittel (30) zum manuellen Lösen des Fensters (10) von dem Körper (3) aufweist, um einen Notausstieg zu öffnen, wobei das Mittel zum Loslösen (30) mit dem Mittel zur Führung (15) zusammenwirkt.

2. Paneel nach Anspruch 1,
**dadurch gekennzeichnet, dass** die transparente Fläche (12) gegenüber einer Öffnung (4) des Körpers (3) liegt, während das Fenster (10) sich in einer geschlossenen Stellung befindet, wobei die Öffnung (4) vorgegebene Abmessungen aufweist, um es einer Person zu ermöglichen, durch sie hindurchzusteigen.

3. Paneel nach einem der Ansprüche 1 bis 2,
**dadurch gekennzeichnet, dass** das Fenster (10) relativ zum Körper (3) gleitet, wobei das Mittel (15) zum Führen mindestens eine erste Schiene (16) und mindestens eine zweite Schiene (17) aufweist, die am Körper (3) befestigt sind und in Höhenrichtung gesehen zu beiden Seiten des Fensters (10) angeordnet sind, wobei die erste Schiene (16) mit mindestens einem Verbindungsmittel (18) des Fensters (10) zusammenwirkt, und die zweite Schiene (17) mit dem Mittel (30) zum Ablösen zusammenwirkt.

4. Paneel nach Anspruch 3,
**dadurch gekennzeichnet, dass** jede erste Schiene (16) ein erstes Rollenlager (21) aufweist, das in einer ersten Gleitführung (23) gleitet, wobei das Verbindungsmittel (18) einen Stift (20) zum Verbinden des Rahmens (11) aufweist, wobei dieser Verbindungsstift (18) in eine nach oben gerichtete Öffnung (22) des Rollenlagers (21) eingeführt werden kann.

5. Paneel nach einem der Ansprüche 3 oder 4,
**dadurch gekennzeichnet**, dassjede zweite Schiene (17) mindestens einen mit einer Kufe (25) versehenen Klotz (24) aufweist, der in einer zweiten Gleitführung (26) der zweiten Schiene (17) gleitet, wobei das Mittel (30) zum Loslösen mit einem Rückhaltemittel (31) pro Klotz (24) versehen ist, das mit dem Klotz (24) durch Formschluss zusammenwirkt, sowie mit einem beweglichen Verriegelungsfinger (32) pro Klotz (24), um jedes Rückhaltemittel (31) reversibel an einem Klotz (24) zu befestigen.

6. Paneel nach Anspruch 5,
**dadurch gekennzeichnet, dass** das Rückhaltemittel (31) die Form eines Us aufweist, mit zwei Seitenschenkeln (33), wobei der Klotz (24) zwischen den Seitenschenkeln (33) angeordnet ist, wobei der Verriegelungsfinger (32) den Klotz (24) und die beiden Seitenschenkel (33) durchquert, während das Mittel zum Loslösen (30) das Fenster (10) am Körper (3) befestigt.

7. Paneel nach einem der Ansprüche 5 bis 6,
**dadurch gekennzeichnet, dass** das Mittel zum Loslösen (30) mindestens einen Abwurfgriff (35, 36) aufweist, welcher mit dem Fenster (10) fest verbunden ist und über einen mechanischen Mechanismus (37) mit jedem Verriegelungsfinger (32) verbunden ist.

8. Paneel nach Anspruch 7,
**dadurch gekennzeichnet, dass** das Mittel (30) zum Loslösen zwei Abwurfgriffe (35, 36) aufweist, die in Querrichtung zu beiden Seiten der transparenten Fläche (12) des Fensters angeordnet sind.

9. Paneel nach einem der Ansprüche 1 bis 8,
**dadurch gekennzeichnet, dass** es aufweist:
- zwei erste Schienen (16) des Führungsmittels (15), die auf dem Körper (3) befestigt sind und mit zwei Verbindungsstiften (20) des Rahmens (11) des Fensters (10) zusammenwirken,
- zwei zweite Schienen (17) des Führungsmittels (15), die auf dem Körper (3) befestigt sind, wobei jede zweite Schiene (17) einen Klotz (24) mit einer Kufe (25) aufweist, der in einer zweiten Gleitführung (26) der zweiten Schiene (17) gleitet, wobei das Mittel (30) zum Loslösen mit zwei Rückhaltemitteln (31) und zwei beweglichen Verriegelungsfingern (32) versehen ist, wobei jedes Rückhaltemittel (31) durch Formschluss mit einem Klotz (24) sowie mit einem Verriegelungsfinger (32) zusammenwirkt, wobei jeder Verriegelungsfinger (32) jedes Rückhaltemittel (31) an einem Klotz (24) reversibel befestigt,
- mindestens einen Abwurfgriff (35, 36), der über einen mechanischen Mechanismus mit einem zwischengeschalteten Drehorgan (38) verbunden ist, wobei jeder Verriegelungsfinger (32) an zwei diametral gegenüberliegenden Punkten (38', 38") des Drehorgans (38) angelenkt ist, wobei eine Drehung des Abwurfgriffs (35, 36) eine Translationsbewegung der beiden Verriegelungsfinger (32) in entgegengesetzte Richtungen bewirkt.

10. Paneel nach einem der Ansprüche 1 bis 9,
**dadurch gekennzeichnet, dass** es einen Schiebegriff (50) aufweist, der mit einem Haken (5) des Körpers (3) zusammenwirkt.

11. Paneel nach Anspruch 10,
**dadurch gekennzeichnet, dass** mindestens ein Abwurfgriff (35, 36) über eine mechanische Verbindung (51) mit dem Schiebegriff (50) verbunden ist, um das Loslösen des Schiebegriffs (50) von dem Haken (5) auszulösen.

12. Paneel nach Anspruch 11,
**dadurch gekennzeichnet, dass** die mechanische Verbindung (51) ein Kabel (53) aufweist, welches an einem Stift (55) befestigt ist, der den Schiebegriff (50) mit dem Fenster (10) in einer ersten Verriegelungsstellung verbindet, und der den Schiebegriff des Fensters in einer zweiten Entriegelungsstellung löst.

13. Fahrzeug (1),
**dadurch gekennzeichnet, dass** es ein Paneel (2) nach einem der Ansprüche 1 bis 12 aufweist.

## Claims

1. Panel (2) for a vehicle (1) provided with a body (3) extending longitudinally and in elevation, said body (3) having a movable window (10) and a means (15) for guiding a movement of said window (10) relative to the body (3), said window (10) having a frame (11) within which there is a transparent surface (12),
**characterised in that** said window (10) comprises a means (30) for manually releasing the window (10) from the body (3) in order to provide an emergency exit, the releasing means (30) cooperating with the guiding means (15).

2. Panel according to Claim 1,
**characterised in that** said transparent surface (12) is in register with an opening (4) in said body (3) when the window (10) is in a closed position, said opening (4) having given dimensions for enabling an individual to pass therethrough.

3. Panel according to any one of Claims 1 to 2,
**characterised in that** said window (10) slides longitudinally relative to said body (3), and said guide means (15) comprises at least one first rail (16) and at least one second rail (17) which are fastened to the body (3) and arranged at opposite ends of the window (10) in elevation, the first rail (16) cooperating with at least one means (18) for connecting the window (10), the second rail (17) cooperating with the releasing means (30).

4. Panel according to Claim 3,
**characterised in that** each first rail (16) comprises a first running means (21) sliding in a first slideway (23), and said connecting means (18) comprises a pin (20) for connecting said frame (11), the connecting pin (18) being able to be pressed into an orifice (22) in elevation of said running means (21).

5. Panel according to any one of Claims 3 to 4,
**characterised in that** each second rail (17) comprises at least one stud (24) provided with a runner (25) sliding in a second slideway (26) of said second rail (17), said releasing means (30) being provided with one retention means (31) per stud (24) cooperating by shape interference with said stud (24), and with one movable locking finger (32) per stud (24) for securing each retention means (31) reversibly to a stud (24).

6. Panel according to Claim 5,
**characterised in that** said retention means (31) possesses a U-shape having two side branches (33), said stud (24) being arranged between said side branches (33), said locking finger (32) passing through said stud (24) and said side branches (33) when said releasing means (30) secures the window (10) to the body (3).

7. Panel according to any one of Claims 5 to 6,
**characterised in that** said releasing means (30) includes at least one jettisoning handle (35, 36) secured to the window (10) and connected by a mechanical link (37) to each locking finger (32).

8. Panel according to Claim 7,
**characterised in that** said releasing means (30) includes two jettisoning handles (35, 36) arranged transversely on opposite sides of a transparent surface (12) of the window.

9. Panel according to any one of Claims 1 to 8,
**characterised in that** it comprises:
- two first rails (16) of the guiding means (15) which are fastened to said body (3) and cooperate with two pins (20) for connecting the frame (11) of the window (10),
- two second rails (17) of the guiding means (15) which are fastened to said body (3), each second rail (17) comprising a stud (24) provided with a runner (25) sliding in a second slideway (26) of said second rail (17), said releasing means (30) being provided with two retention means (31) and two movable locking fingers (32), each retention means (31) cooperating by shape interference with a stud (24) and with a locking finger (32), each locking finger (32) securing each retention means (31) reversibly to a stud (24),
- at least one jettisoning handle (35, 36) connected by a mechanical link to an intermediate rotary member (38), each locking finger (32) being hinged to two diametrically opposite points (38', 38") of said rotary member (38), rotation of the jettisoning handle (35, 36) causing a translation of the two locking fingers (32) in opposite directions.

10. Panel according to any one of Claims 1 to 9,
**characterised in that** it comprises a slide handle (50) cooperating with a hook (5) of said body (3).

11. Panel according to Claim 10,
**characterised in that** at least one jettisoning handle (35, 36) is connected to said slide handle (50) by a mechanical linkage (51) for causing the slide handle (50) to be released from said hook (5).

12. Panel according to Claim 11,
**characterised in that** said mechanical linkage (51) includes a cable (53) connected to a pin (55), the pin (55) connecting the slide handle (50) to the window (10) in a locked, first position, and releasing the slide handle from the window in an unlocked, second position.

13. Vehicle (1),
**characterised in that** it comprises a panel (2) according to any one of Claims 1 to 12.
